# EUROPEAN PATENT APPLICATION

(11) **EP 3 039 957 A1**
(43) Date of publication of application: **06.07.2016**
(21) Application number: 15163573.7
(22) Date of filing: 14.04.2015
(51) Int. Cl.: A01G 9/00, A01G 31/02

(54) **CULTIVATING BOX FOR PLANTS AND CULTIVATING METHOD USED BY THE CULTIVATING BOX**

(30) Priority: 31.12.2014 TW 103146456
(71) Applicant: Cal-Comp Biotech Co., Ltd., New Taipei City 222 (TW)
(72) Inventor: Kao, Po-Chou, 222 New Taipei City (TW); Peng, Hsin-Hua, 222 New Taipei City (TW); Wu, Tai-Yi, 222 New Taipei City (TW)
(74) Representative: dompatent von Kreisler Selting Werner - Partnerschaft von Patent- und Rechtsanwälten mbB

(57) **Abstract**

A cultivating box (1) comprises a micro control unit (MCU)(11), a memeory module (14), a light adjusting module (12) and a container (10) having a cultivating space (Z1) for cultivating plants (3) is presented. The memory module (14) records a plurality of parameters (141-143) respectively corresponding to different growth conditions needed by the plants (3) in different growth stages. The MCU (11) applies corresponding parameters of the plurality of parameters (141-143) recorded in the memory module (14) to control the light adjusting module (12) in each growth stage of the plants (3) for adjusting the light status of the container (10), so the environment of the container (10) can satisfy the requirement of the plant (3) in every growth stage.

## Description

### BACKGROUND OF THE INVENTION

### 1.Technical field

The technical field relates to a cultivation of plants, and in particular to a cultivating box for cultivating the plants, and a cultivating method used by the cultivating box.

### 2.Description of prior art

The quality and quantity of cultivated plants, for example, vegetable, fruit, etc., is esaily affected by different climates, such as illumination time, temperature, humidity, etc.. For solving this problem, the skilled person in the market provides a concept that can cultivate the plants by manual ways.

The manual ways mentioned above for cultivating the plants mainly use appliances like artificial lights, thermostats, etc. to create an appropriate environment for the plants to grow up well. Therefore, the plants can be manually cultivated indoor. Also, the environment parameter such as illumination time and temperature are controlled manually, so the reduction of the quality and quantity of the plants because of the variation of the climante can be avoided.

Generally, the manual cultivation is executed in a plants factory. In particularly, the factory usually has multiple aeras, such as dark area, lighting area, etc., and each of the multiple areas is respectively used to provide different environment. For example, the dark area does not provide any light, which is being a dark room for twenty-four hours. On the contrary, the lighting area illuminates the light for twenty-four hours continually.

The staff of the factory manages the plants in every growth stage of the plants, and transports the plants to a corresponding area which can provide a corresponding envrionment for the plants in each growth stage of the platns. For example, if the plants are in a growth stage that cannot receive the light, the staff transports the plants to the dark area to cultivate manually or by a conveyer. Else, if the plants is in other growth stage that needs to receive the light (for example, in a sprouting period or a seedling growing period), the staff transports the plants to the lighting area to cultivate manually or by the conveyer. Therefore, the plants are transported between several areas according to its current growth stage, so it can obtain corresponding growth environments in every growth stage anyway.

However, the above mentioned manual cutivation (comprising the multiple areas and the conveyer) needs a lot of construction costs, only suits for the factory which cultivates a big quantities of plants, but does not really suit for a personal cultivation.

### SUMMARY OF THE INVENTION

The disclosure is directed to a cultivating box and a cultivating method for cultivating plants, which can provide different growth environments in a single box for the plants according to different growth stages of the plants, so as to help the plants to growth in the box.

In one of the exemplary embodiments, the cultivating box comprises a micro control unit (MCU), a memeory module, a light adjusting module and a container having a cultivating space for cultivating plants. The cultivating box executes the cultivating method therein. In particularly, the memory module records a plurality of parameters respectively corresponding to different growth conditions needed by the plants in different growth stages. The MCU applies corresponding parameters of the plurality of parameters recorded in the memory module to control the light adjusting module in each growth stage of the plants for adjusting the light status of the container, so the environment of the container can satisfy the requirement of the plants in any growth stage.

Comparing with related arts, the MCU in the present disclosure automatically adjusts environment of the container according to the growth stage of the plants, so the environment of the container changes dynamically in accordance with the variation of the growth stage of the plants. Therefore, a user can provide different growth environments needed by the plants in different growth stages by one single cultivating box. As a result, the user is free from transporting the plants between multiple areas in different growth stages of the plants, and a lot of cultivating cost is effectively saved.

### BRIEF DESCRIPTION OF THE DRAWINGS

Fig.1 is a block diagram of a cultivating box of a first embodiment according to the present disclosure.
Fig.2 is a perspective view of a cultivating box of a first embodiment according to the present disclosure.
Fig.3 is a block diagram of a control circuit of a first embodiment according to the present disclosure.
Fig.4 is a control circuit diagram of a first embodiment according to the present disclosure.
Fig.5 is a block diagram of a control circuit of a second embodiment according to the present disclosure.
Fig.6 is a control circuit diagram of a second embodiment according to the present disclosure.
Fig.7 is a cultivating flowchart of a first embodiment according to the present disclosure.

### DETAILED DESCRIPTION OF THE INVENTION

In cooperation with the attached drawings, the technical contents and detailed description of the present invention are described thereinafter according to a preferable embodiment, being not used to limit its executing scope. Any equivalent variation and modification made according to appended claims is all covered by the claims claimed by the present invention.

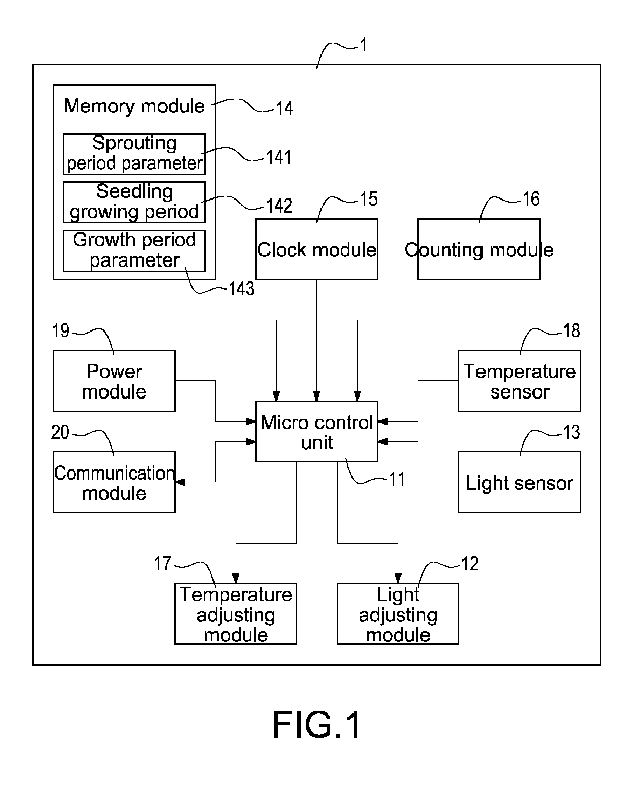

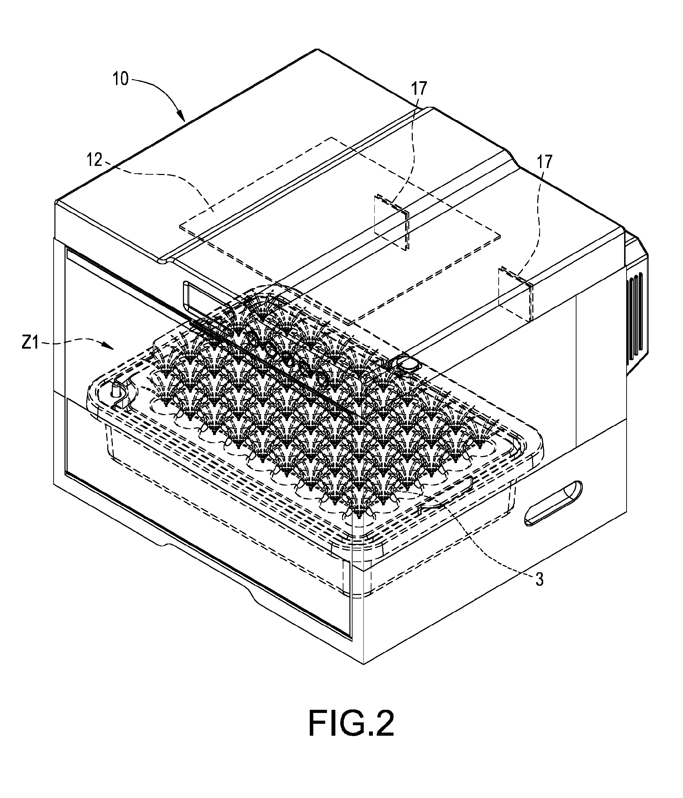

Fig.1 is a block diagram of a cultivating box of a first embodiment according to the present disclosure. Fig.2 is a perspective view of a cultivating box of a first embodiment according to the present disclosure. One exemplary disclosure of this invention here discloses a plant cultivating box (referred to as a cultivating box 1 hereinafter), and as shown in Fig.1, the cultivating box 1 in this disclosure mainly comprises a micro control unit (MCU) 11, a light adjusting module 12, a light sensor 13 and a memory module 14, wherein the MCU 11 is electrically connected with the light adjusting module 12, the light sensor 13 and the memory module 14.

As shown in Fig.2 then, the light adjusting module 12 is arranged in a container 10 of the cultivating box 1, and is used to illuminate the container 10 for being as a light source of the cultivating box 1. The container 10 has one or more cultivating spaces (Z1) therein for a user to cultivate one or more types of plants 3. If the light adjusting module 12 turns off, the inside of the container 10 cannot receive any light as a dark room, on the contrary, the container 10 can receive the light illuminated from the light adjusting module 12 if the light adjusting module 12 turns on. Therefore, the plants 3 cultivated in the container 10 can obtain the light needed in its growth period from the light adjusting module 12, and can grow well in the cultivating space Z1. The plants 3 in this disclosure can be any type of plants, such as vegetables, fruits, etc.. In this embodiment, a single container 10 is used to cultivate the plants in only one type or several types having similar characteristics (i.e., the plants which need same or similar growth conditions).

In this embodiment, the light adjusting module 12 comprises at least one light emitting diode (LED). The light sensor 13 is used to sense the light in and/or out of the container 10, and generates a light strength to the MCU 11. The MCU 11 executes an analysis based on the received light strength, and controls the light adjusting module 12 to turn on or to enhance the brightness if the MCU 11 determines the light strength of the light adjusting module 12 is not enough. Also, the MCU 11 controls the light adjusting module 12 to reduce the brightness or to turn off if determining the light strength of the light adjusting module 12 is too strong. In particularly, The MCU 11 determines the light strength is not enough if the light strength cannot satisfy the requirement of the plants 3 in the container 10, and determines the light strength is too strong if the light strength exceeds the requirement of the plants 3 in the container 10.

The memory module 14 records a plurality of parameters, each parameter respectively corresponds to one growth stage of the platns 3. More specifically, the plurality of parameters respectively record different growth conditions needed by the plants 3 in different growth stages. The main technology of this invention is the MCU 11 can select corresponding one of the plurality of parameters based on the current growth stage of the plants 3, and adjust the light adjusting module 12 to turn on, turn off or adjust the brightness in accordance with the selected corresponding parameter, so as to keep the light status of the container 10 satisfying the growth conditions needed by the plants in each growth stage.

In this embodiment, the growth stages of the plants 3 basically comprises a sprouting period, a seedling growing period, and a growth period. The plurality of parameters comprises a sprouting period parameter 141, a seedling growing period parameter 142, and a growth period parameter 143, wherein the sprouting period pamarater 141 is corresponding to the growth conditions needed by the plants 3 in the sprouting period, the seedling growing period parameter 142 is corresponding to the growth conditions needed by the plants 3 in the seedling growing period, and the growth period parameter 143 is corresponding to the growth conditions needed by the plants 3 in the growth period. In this embodiment, the above mentioned growth conditions comprise a first time period the plants 3 need to receive the light in each growth stage, a second time period the plants 3 need to prevent from receiving the light in each growth period, a temperature value needed by the plants 3 in each growth period, etc., but not liminited thereto.

In particularly, the seeds of the plants 3 can grow well if they are moist enough in the sprouting period, but the moisture of their surface may be vaporized if receiving the light at the time. Else, the seeds generally sprout in twenty-four hours after being cultivated. As such, the sprouting period paramter 141 in this embodiment can be set as "Twenty-four hours without the light, and for one day".

The plants 3 need to receive the light in the seedling growing period, and the fresh weight (FW) of the plants 3 is proportional to the lighting value (µmol/m²) accumulated in an unit area of the plants 3 per day. Also, for raising the fresh weight, the plants 3 need to receive the light continually in twenty-four hours, and the plants 3 usually step to the growth period in fourteen days after receiving the light continually. As such, the seedling growing period parameter 142 in this embodiment can be set as "twenty-four hours with light for one day, and lasting for fourteen days".

In the growth period, the plants 3 in different types respectively have different requirements. Generally, the plants 3 still need to receive the light in the growth period, but if receiving the light for excessive long time, the plants 3 may not sustain the light and will generate yellow leaves or burnt leaves (i.e., the absorption of the plants 3 is faster than the metabolism of the plants 3). As such, the growth period parameter 143 in this disclosure can be set as different content according to the type of the plants 3.

For example, lettuce and sugar beet are long-day plants, so if the plants 3 in this disclosure are lettuce or sugar beet, the growth period parameter 143 can be set as "In a day, sixteen hours with light, then eight hours without light". For other example, rocket is a short-day plant, no need for the light so much. If the plants 3 in this disclosure are rocket, the growth period parameter 143 can be set as "In a day, twelve hours with light, then twelve hours without light".

In this disclosure, the MCU 11 applies a corresponding paramter recorded in the memory module 14 based on the current growth stage of the plants (for example, applies the sprouting period parameter 141 when the plants 3 are in the sprouting period, applies the seedling growing period pamarater 142 when the plants 3 are in the seedling growing period, and applies the growth period parameter 143 when the plants 3 are in the growth period), and controls the light adjusting module 12 based on the applied corresponding parameter. Therefore, the environment of the container 10 can satisfy the growth conditions needed by the plants 3 in the current growth stage. The environment mentioned here indicates the light status of the container 10, but not limited thereto.

For example, if the user cultivate the above mentioned lettuce in the cultivate space Z1, the MCU 11 firstly applies the sprouting period parameter 141 to control the light adjusting module 12 to turn off for twenty-four hours after being activated, so as to prevent the container 10 from the light in twenty-four hours. After the twenty-four hours pass, the MCU 11 then applies the seedling growing period parameter 142 automatically to control the light adjusting module 12 to turn on, and adjusts the brightness of the light illuminated from the light adjusting module 12 for satisfying the requirement of the lettuce in the seedling growing period, and makes the container 10 to fill with the light in twenty-four hours for fourteen days. After the fourteen days pass, the MCU 11 finally applies the growth period parameter 143 automatically to control the light adjusting module 12, so as to make the container 10 to provide the environment that filled with the light for sixteen hours and then cut off the light for eight hours.

By using the cultivating box 1 in this invention, the plants 3 can obtain different growth environments in different growth stages respectively in one single container 10. Therefore, the plants 3 need not to be transported between different environments in different growth stages, it is very convenient.

As shown in Fig.1, the cultivating box 1 further comprises a clock module 15 and a counting module 16, which are electrically connected with the MCU 11. In this embodiment, the clock module 15 is a real-time clock (RTC) chip, used to provide current time for the MCU 11. The counting module 16 is a timer chip, used for the MCU 11 to determine if the plants pass the sprouting period, the seedling growing period and the growth period or not. In this embodiment, the MCU 11, the clock module 15 and the counting module 16 can be physically separated components which are electrically connected with each other, or can be integreated into a single integrated circuit (IC), not limited thereto.

The cultivating box 1 further comprises a temperature adjusting module 17 and a temperature sensor 18, which are electrically connected with the MCU 11. The temperature sensor 18 is used to sense current temperature in and/or out of the container 10, and generates a sensed temperature for the MCU 11 for further analysis. In particularly, the MCU 11 compares the sensed temperature with the parameters 141-143 recorded in the memory module 14, so as to determine if the current temperature of the container 10 can satisfy the growth conditions needed by the plants 3 in the current growth stage or not. Further, if the current temperature cannot satisfy the requirement of the plants 3 in the current growth stage, the MCU 11 controls the temperature adjusting module 17 to adjust the temperature of the container 10 (warming or cooling). In this embodiment, the temperature adjusting module 17 is arranged in the container 10 (as shown in Fig.2), but not limited thereto.

More specifically, the MCU 11 applies one of the plurality of parameters 141-143 as the corresponding parameter in accordance with the current growth stage of the plants 3, and controls the temperature adjusting module 17 based on the applied corresponding parameter, so the cultivating box 1 can adjust the temperature of the container 10 dynamically according to the variation of the growth stage of the plants. Therefore, the environment of the container 10 can always satisfy the growth conditions needed by the plants 3 in every growth stage. The environment mentioned here indicates the temperture status of the container 10. Moreover, if the temperature out of the cultivating box 1 is changed (for example, the climate changes hardly, or the cultivating box 1 is moved to other location having different temperature), the cultivating box 1 can also keep the the container 10 in a constant temperature through the temperature adjusting module 17 and the temperature sensor 18, so as to prevent the temperature status of the container 10 from being affected by outside temperature.

In this embodiment, the temperature adjusting module 17 comprises one or more thermoelectric cooler. The thermoelectric cooler comprises a condensing surface and a heat dissipating surface. When the condensing surface operates, it distributes cold air to the container 10 for reducing the temperature of the container 10. On the contrary, when the heat dissipating surface operates, it distributes hot air to the container 10 to raise the temperature of the container 10. The MCU 11 controls the operation of the condensing surface and the heat dissipating surface of the thermoelectric cooler dynamically, so as to keep the temperature of the container 10 as a fixed value, i.e., keep the container 10 in the constant temperature (which can also satisfy the requirement of the plants in the current growth stage in the meantime).

It should be mentioned that the temperature adjusting module 17 and the temperature sensor 18 can also be a humidity adjusting module and a humidity sensor in other embodiments, therefore, the cultivating box 1 can keep the humidity of the container 10 in a fixed value through above mentioned operation, so as to make the humidity status of the container 10 can satisfy the growth conditions needed by the plants 3 in every growth stage.

The cultivating box 1 further comprises a power module 19, electrically connected to the MCU 11. The power module 19 provides the power needed by the cultivating box 1 for operation. In this embodiment, the power module 19 is a power line for connecting with supply mains or a battery set, not limited thereto. The cultivating box 1 further comprises a cummincation module 20, electrically connected to the MCU 11. The communication module 20 is used to communicate for the cultivating box 1 with external apparatuses (not shown). In this embodiment, the communication mdoule 20 is a near field communication (NFC) module, and is used to connect with the external apparatuses wirelessly for setting the parameters 141-143, but not limited thereto.

In this disclosure, the MCU 11 is implemented by an integrated circuit (IC), and is electrically connected with the light adjusting module 12 and the temperature adjusting module 17 through general purpose I/O (GPIO) pins thereon, electrically connected with the light sensor 13 and the temperature sensor 18 through inter-ingegrated circuit (I₂C) pins thereon, and connected with the communication module 20 through universal asynchronous receiver/transmitter (UART) interface thereon. However, the above description is just a preferred embodiment of the present disclosure, not intended to limit the scope of this invention.

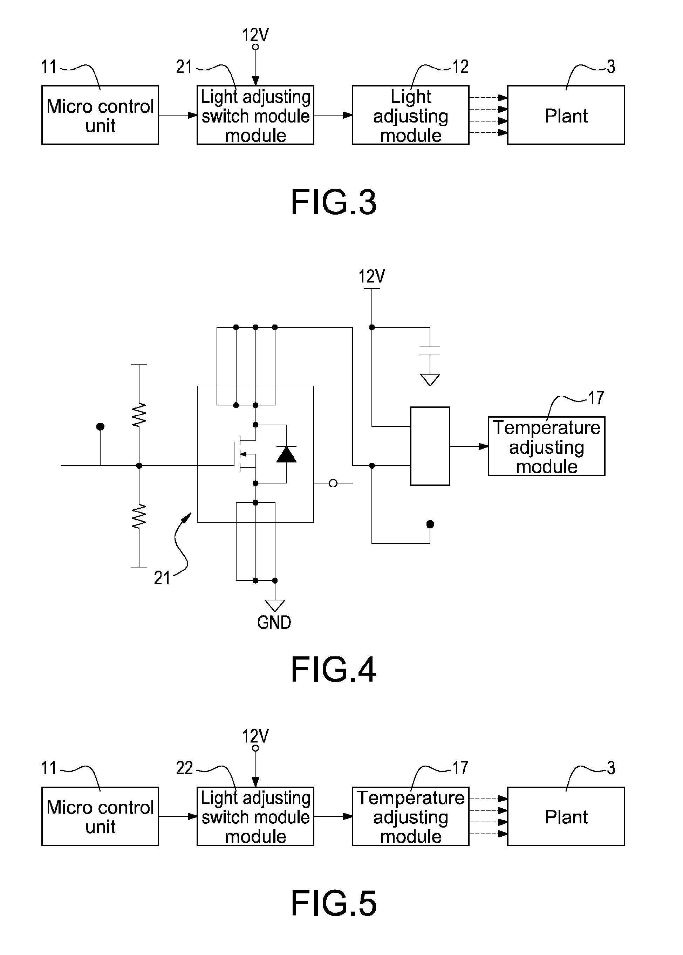

Fig.3 is a block diagram of a control circuit of a first embodiment according to the present disclosure. Fig.4 is a control circuit diagram of a first embodiment according to the present disclosure. As shown in Fig.3, the cultivating box 1 further comprises a light adjusting switch module 21, which is electrically connected between the MCU 11 and the light adjusting module 12.

In particularly, the MCU 11 outputs a control signal to the light adjusting switch module 21 to control the light adjusting switch module 21 to switch on or switch off, so as to decide if the light adjusting module 12 can receive a power (as a 12V power shown in Fig.3) to operate or not. In this embodiment, the light adjusting module 12 can receive the power to operate if the light adjusting switch module 21 is switched on, and cannot receive the power to operate if the light adjusting switch module 21 is switched off. Besides, the MCU 11 can further control the amount of the power passing through the light adjusting switch module 21, so as to decide the brightness of the light illuminated from the light adjusting module 12. Therefore, the light brightness of the container 10 is controlled accurately by the MCU 11 to satisfy the requirement of the plants 3 in every growth stage.

As such, the MCU 11 outputs high potential control signal or low potential control signal to the light adjusting switch module 21 through above mentioned GPIO pins, wherein the light adjusting switch module 21 is switched on when receiving the high potential control signal, and is switched off when receiving the low potential control signal, but not limited thereto. As shown in Fig.4, the light adjusting switch module 21 in this embodiment mainly comprises at least one field-effect transistor (FET), and in particularly comprises at least one metal-oxide semiconductor FET (MOSFET), but not limited thereto.

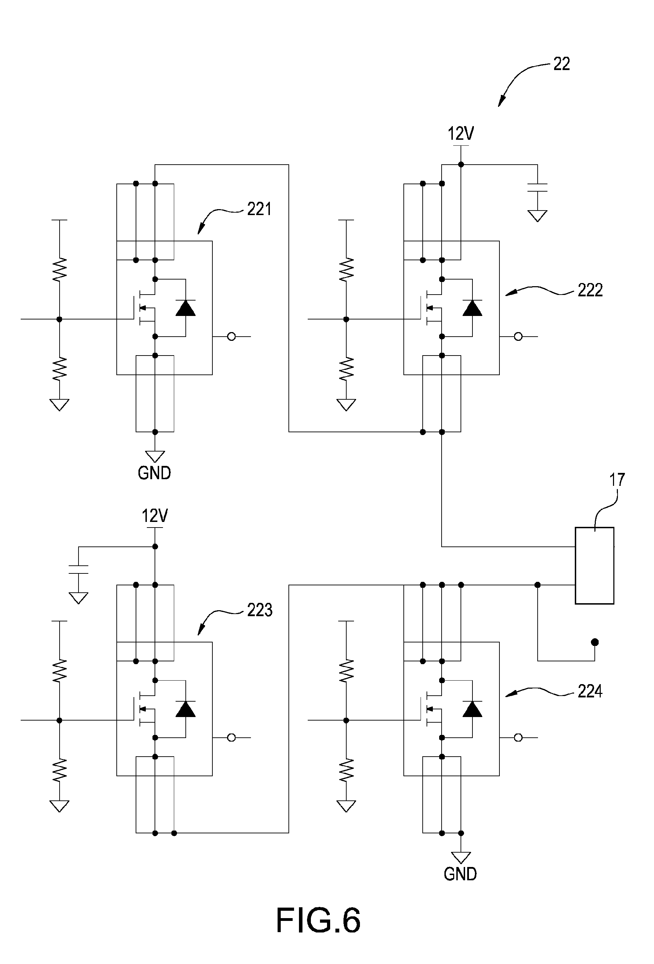

Fig.5 is a block diagram of a control circuit of a second embodiment according to the present disclosure. Fig.6 is a control circuit diagram of a second embodiment according to the present disclosure. As shown in Fig.5, the cultivating box 1 further comprises a temperature adjusting switch module 22, which is electrically connected between the MCU 11 and the temperature adjusting module 17.

In particularly, the temperature adjusting module 17 connects to a power source and a ground through the temperature adjusting switch module 22. If the temperature adjusting module 17 connects to the power source and the ground through the temperature adjusting switch module 22 in a forward direction, the condensing surface of the temperature adjusting module 17 operates to distribute cold air thereof. On the contrary, if the temperature adjusting module 17 connects to the power source and the ground through the temperature adjusting switch module 22 in a reverse direction, the heat dissipating surface of the temperature adjusting module 17 operates to distribute hot air thereof.

In this embodiment, the temperature adjusting switch module 22 comprises a plurality of MOSFETs. In the embodiment shown in Fig.6, the temperature adjusting switch module 22 comprises a first switch 221, a second switch 222, a third switch 223, and a fourth switch 224, but not limited thereto. The MCU 11 outputs high potential control signal or low potential control signal respectively to the switches 221-224 of the temperature adjusting switch module 22 through above mentioned GPIO pins, so as to control the switches 221-224 to switch on or switch off respectively.

As shown in Fig.6, if the temperature adjusting switch module 22 is controlled by the MCU 11 to switch the first switch 221 and the third switch 223 off and to switch the second switch 222 and the fourth switch 224 on, the temperature adjusting module 17 connects to the power source (12V) and the ground (GND) in a forward direction, so the conpending surface of the temperature adjusting module 17 operates. If the temperature adjusting switch module 22 is controlled by the MCU 11 to switch the second switch 222 and the fourth switch 224 off and to switch the first switch 221 and the third switch 223 on, the temperature adjusting module 17 connects to the power source (12V) and the ground (GND) in a reverse direction, so the heat dissipating surface of the temperature adjusting module 17 operates. However, the above description is just a preferred embodiment of the present disclosure, in other embodiments, the temperature adjusting module 17 can be implemented by other components but the thermoelectric cooler, and the temperature adjusting switch module 22 can be implemented by other components but the four MOSFETs, not intented to limit the scope of this invetnion.

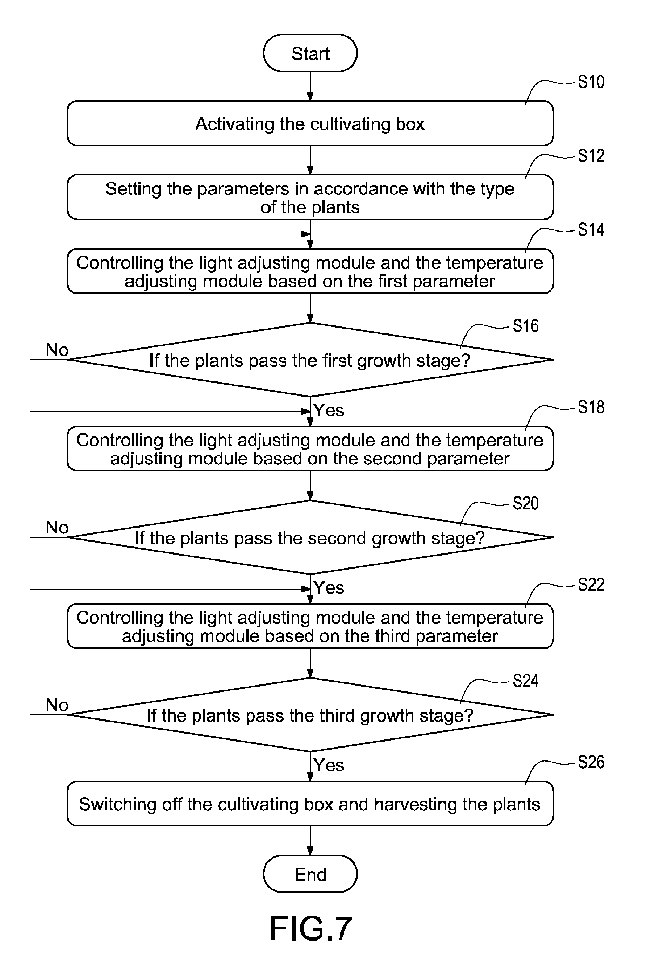

Fig.7 is a cultivating flowchart of a first embodiment according to the present disclosure. In this disclosure, the cultivating box 1 executes a cultivating method through the MCU 11, so the container 10 of the cultivating box 1 can always provide a corresponding environment for the plants 3 in each growth stage of the plants 3. The detailed description is present as follow.

Firstly, the user cultivates the plants 3 to the cultivating space Z1 of the container 10 by a manual way or a mechanism, then activates the cultivating box 1 (step S10). In the meantime, the parameters 141-143 is set according to the type of the cultivated plants 3 (step S12), and each of the parameters 141-143 respectively corresponds to the growth conditions needed by the plants 3 in each growth stage. However, the above steps S10 and S12 do not have a fixed execution order, the user can set the parameters 141-143 after finishing the plants 3 cultivation, or can cultivate the plants 3 to the cultivating space Z1 after setting the parameters 141-143 completely, not limited thereto.

In a first growth stage of the plants 3, the MCU 11 reads a first parameter from the memory module 14, and controls the light adjusting module 12 and the temperature adjusting module 17 based on the first parameter (step S14). Therefore, the environment of the container 10 can statisfy the growth conditions needed by the plants 3 in the first growth stage. In this embodiment, the first growth stage indicates the above mentioned sprouting period of the plants 3, and the first parameter indicates the sprouting period parameter 141, but not limited thereto.

The MCU 11 keeps determining if the plants 3 pass the first growth stage or not through the counting module 16 after the step S14 (step S16). If the plants 3 do not pass the first growth stage yet, the MCU 11 re-executes the step S 14 and keeps controlling the light adjusting module 12 and the temperature adjusting module 17 based on the first parameter. If the plants 3 do pass through the first growth stage, the MCU 11 then changes to read a second parameter from the memory module 14 automatically, and starts to contorl the light adjusting module 12 and the temperature adjusting module 17 based on the second parameter (step S18). Therefore, the environment of the container 10 can statisfy the growth conditions needed by the plants 3 in a second growth stage. In this embodiment, the second growth stage indicates the above mentioned seedling growing period of the plants 3, and the second parameter indicates the seedling growing period parameter 142, but not limited thereto.

As such, the MCU 11 keeps determining if the plants 3 pass the second growth stage or not through the counting module 16 after the step S18 (step S20). If the plants 3 do not pass the second growth stage, the MCU 11 re-ececutes the step S18 and keeps controlling the light adjusting module 12 and the temperature adjusting module 17 based on the second parameter. If the plants 3 do pass through the second growth stage, the MCU 11 changes again to read a third parameter from the memory module 14 automatically, and starts to control the light adjusting module 12 and the temperature adjusting module 17 based on the third parameter (step S22). Therefore, the environment of the container 10 can statisfy the growth conditions needed by the plants 3 in a third growth stage. In this embodiment, the third growth stage indicates the above mentioned growth period of the plants 3, and the third parameter indicates the growth period parameter 143, but not limited thereto.

After the step S22, the MCU 11 keeps determining if the plants 3 pass the third growth stage or not (step S24). If the plants 3 do not pass the third growth stage yet, the MCU 11 re-executes the step S22 and keeps controlling the light adjusting module 12 and the temperature adjusting module 17 based on the third paramter. If the plants 3 do pass through the third growth stage, that means the plants 3 are maturity, and the cultivating box 1 can be switched off automatically or manually, so the user can harvest the mature plants 3 from the container 10 (step S26).

The cultivating box and cultivating method in this disclosure can change the environment of the container dynamically (such as the light status and the temperature status), therefore, a single box can provide different growth environments for the plants in different growth stages respectively. As such , the user is allowed to cultivate plants in a narrow space conveniently.

## Claims

1. A cultivating box (1) comprising:
a container (10), having a cultivating space (Z1) for cultivating plants (3);
a memory module (14), recorded a plurality of parameters, and each of the plurality of parameters respectively corresponding to growth conditions needed by the plants in each growth stage;
a light adjusting module (12), being a light source of the cultivating box (1) and arranged in the container (10);
a micro control unit (11), electrically connected with the memory module (14) and the light adjusting module (12), wherein the micro control unit (11) applies a corresponding parameter of the plurality of parameters in accordance with a current growth stage of the plants and controls the light adjusting module (12) based on the applied corresponding parameter, and a light status of the container (10) satisfies the growth conditions needed by the plants (3) in the current growth stage.

2. The cultivating box (1) in claim 1, wherein the light adjusting module (12) comprises at least one light emitting diode (LED).

3. The cultivating box (1) in claim 1, wherein the plurality of parameters comprises a sprouting period parameter (141), a seedling growing period parameter (142) and a growth period parameter (143), and the sprouting period parameter (141) corresponds to the growth conditions needed by the plants (3) in a sprouting period, the seedling growing period parameter (142) corresponds to the growth conditions needed by the plants (3) in a seedling growing period, the growth period parameter (143) corresponds to the growth conditions needed by the plants (3) in a growth period.

4. The cultivating box (1) in claim 3, wherein the sprouting period parameter (141) is set as twenty-four hours without light and for one day, and the seedling growing period parameter (142) is set as twenty-four hours with light for one day and lasting for fourteen days.

5. The cultivating box (1) in claim 3, further comprises:
a clock module (15), electrically connected with the micro control unit (11), providing current time for the micro control unit (11); and
a counting module (16), electrically connected with the micro control unit (11), calculating if the plants (3) pass the sprouting period, the seedling growing period and the growth period or not.

6. The cultivating box (1) in claim 5, wherein the micro control unit (11) is an integrated circuit (IC), the clock module (15) is a real-time clock (RTC) chip, and the counting module (16) is a timer chip.

7. The cultivating box (1) in claim 1, further comprises a light adjusting switch module (21), electrically connected between the micro control unit (11) and the light adjusting module (12), wherein the micro control unit (11) controls the light adjusting switch module (21) to switch on, switch off, or adjust an amount of a power passing through the light adjusting switch module (21) by outputting a control signal to the light adjusting switch module (21), so as to decide a light brightness of the light adjusting module (12).

8. The cultivating box (1) in claim 7, wherein the light adjusting switch module (21) comprises at least one metal-oxide semiconductor field-effect transistor (MOSFET).

9. The cultivating box (1) in claim 1, further comprises a temperature adjusting module (17), electrically connected to the micro control unit (11), wherein the micro control unit (11) applies the corresponding parameter of the plurality of parameters in accordance with the current growth stage of the plants (3) and controls the temperature adjusting module (17) based on the applied corresponding parameter, and a temperature status of the container (10) satisfies the growth conditions needed by the plants (3) in the current growth stage.

10. The cultivating box (1) in claim 9, further comprises a temperature adjusting switch module (22), electrically connected between the micro control unit (11) and the temperature adjusting module (17), the temperature adjusting switch module (22) is controlled by the micro control unit (11), wherein a condensing surface of the temperature adjusting module (17) operates to distribute cold air if the temperature adjusting module (17) connects to a power source and a ground through the temperature adjusting switch module (22) in a forward direction, and a heat dissipating surface of the temperature adjusting module (17) operates to distribute hot air if the temperature adjusting module (17) connects to the power source and the ground through the temperature adjusting switch module (22) in a reverse direction.

11. The cultivating box (1) in claim 1, further comprises:
a light sensor (13), electrically connected with the micro control unit (11), sensing the light in and out of the container (10); and
a temperature sensor (18), electrically connected with the micro control unit (11), sensing the temperature in or out of the container (10).

12. A cultivating method used by the cultivating box (1) in claim 1, comprising:
a) controlling the light adjusting module (12) based on a first parameter, wherein the first parameter corresponds to the growth conditions needed by the plants (3) in a first growth stage;
b) controlling the light adjusting module (12) based on a second parameter after the plants (3) passing through the first growth stage, wherein the second parameter corresponds to the growth conditions needed by the plants (3) in a second growth stage;
c) controlling the light adjusting module (12) based on a third parameter after the plants (3) passing through the second growth stage, wherein the third parameter corresponds to the growth conditions needed by the plants (3) in a third growth stage; and
d) switching off the cultivating box (1) after the plants (3) passing through the third growth stage.

13. The cultivating method in claim 12, wherein the first parameter is a sprouting period parameter (141), the second parameter is a seedling growing period parameter (142), the third parameter is a growth period parameter (143), the first growth stage is a sprouting period, the second growth stage is a seedling growing period, the third growth stage is a growth period.

14. The cultivating method in claim 13, wherein the sprouting period parameter (141) is set as twenty-four hours without light and for one day, and the seedling growing period parameter (142) is set as twenty-four hours with light for one day and lasting for fourteen days.

15. The cultivating method in claim 12, further comprises following step before the step a):
a0) setting the plurality of parameters in accordance with a type of the plants (3).

16. The cultivating method in claim 12, wherein the cultivating box (1) further comprises a temperature adjusting module (17) electrically connected with the micro control unit (11), wherein the step a) is to control the light adjusting module (12) and the temperature adjusting module (17) in the meantime based on the first parameter and the light status and a temperature status of the container (10) satisfies the growth conditions needed by the plants (3) in the first growth stage, the step b) is to control the light adjusting module (12) and the temperature adjusting module (17) in the meantime based on the second parameter and the light status and the temperature status of the container (10) satisfies the growth conditions needed by the plants (3) in the second growth stage, the step c) is to control the light adjusting module (12) and the temperature adjusting module (17) in the meantime based on the third parameter and the light status and the temperature status of the container (10) satisfies the growth conditions needed by the plants (3) in the third growth stage.
